# EUROPEAN PATENT APPLICATION

(11) **EP 4 645 582 A1**
(43) Date of publication of application: **05.11.2025**
(21) Application number: 22969784.2
(22) Date of filing: 30.12.2022
(51) Int. Cl.: H01M 50/593, H01M 4/13, H01M 10/0587

(54) **CYLINDRICAL CELL AND ELECTRONIC APPARATUS**

(71) Applicant: Xiamen Ampace Technology Limited, Xiamen City, Fujian Province 361000 (CN)
(72) Inventor: GUO, Jun, Xiamen, Fujian 361000 (CN)
(74) Representative: Icosa
(86) International application number: PCT/CN2022/143946
(87) International publication number: WO 2024/138641

(57) **Abstract**

Some embodiments of this application provide a cylindrical battery and an electronic device. The cylindrical battery includes a jelly-roll electrode assembly. The electrode assembly includes a positive electrode plate. The positive electrode plate includes a positive current collector, a positive active material layer, and an insulation layer. Both the positive active material layer and the insulation layer are disposed on at least one side of the positive current collector. The positive current collector includes a first region corresponding to the positive active material layer, a second region corresponding to the insulation layer, and a third region covered by neither the positive active material layer nor the insulation layer. The second region is located between the first region and the third region in a width direction of the positive current collector. The insulation layer includes a first part possessing a first width W1 and a second part possessing a second width W2, satisfying: W1 + 2 mm ≤ W2 ≤ W1 + 10 mm. The second part is located outside the electrode assembly. The insulation layer of this application can cover an R-corner of the electrode assembly to prevent contact between the electrode assembly and a housing.

## Description

### TECHNICAL FIELD

This application relates to the field of electrochemical energy storage, and in particular, to a cylindrical battery and an electronic device.

### BACKGROUND

With the development of electrochemical energy storage technology, higher requirements have been imposed on the safety performance and energy density of cylindrical batteries (such as a lithium-ion battery), and further improvement in this respect is expected.

### SUMMARY

This application provides a cylindrical battery. The cylindrical battery includes a jelly-roll electrode assembly. The electrode assembly includes a positive electrode plate. The positive electrode plate includes a positive current collector, a positive active material layer, and an insulation layer. Both the positive active material layer and the insulation layer are disposed on at least one side of the positive current collector. The positive current collector includes a first region corresponding to the positive active material layer, a second region corresponding to the insulation layer, and a third region covered by neither the positive active material layer nor the insulation layer. The second region is located between the first region and the third region in a width direction of the positive current collector. The insulation layer includes a first part possessing a first width W1 and a second part possessing a second width W2, satisfying: W1 + 2 mm ≤ W2 ≤ W1 + 10 mm. The second part is located outside the electrode assembly.

In some embodiments, the insulation layer further includes a transition part located between the first part and the second part. A transition interface of the transition part is at an angle α of 10° to 90°. In some embodiments, the insulation layer and the positive active material layer at least partially overlap in a thickness direction of the positive current collector. A width W of an overlap region between the two layers satisfies: 0.5 mm ≤ W ≤ 3 mm. In some embodiments, a length L2 of the second part, a diameter d of the electrode assembly, the first width W1, the second width W2, a thickness h of the positive electrode plate, and the angle α satisfy: πd + (W2 - W1) × cotα ≤ L2 ≤ 2π(d - h) + (W2 - W1) × cotα. In some embodiments, the first width W1 is 1 mm to 5 mm, and the second width W2 is 3 mm to 15 mm. In some embodiments, a thickness H1 of the insulation layer is 10 µm to 100 µm. In some embodiments, a thickness H1 of the insulation layer and a thickness H2 of the positive active material layer satisfy: 0.1H2 ≤ H1 ≤ 0.5H2. In some embodiments, a flexural stress of the insulation layer is less than or equal to 0.04 N. In some embodiments, a bonding force between the insulation layer and the positive current collector is greater than or equal to 20 N/m.

An embodiment of this application further provides an electronic device. The electronic device includes the cylindrical battery.

The insulation layer of this application includes a first part possessing a first width W1 and a second part possessing a second width W2, satisfying: W1 + 2 mm ≤ W2 ≤ W1 + 10 mm. The second part is located outside the electrode assembly. In this way, the insulation layer can prevent the contact and short circuit between a positive electrode plate and a negative electrode plate, and at the same time, can cover the R-corner of the electrode assembly to prevent the contact between the electrode assembly and the housing. In addition, the use of the insulation layer makes an adhesive affixing process omissible, thereby reducing the manufacturing cost while ensuring safety of the electrode assembly.

### BRIEF DESCRIPTION OF DRAWINGS

FIG. 1 is top view of a positive electrode plate in an unwound state according to some embodiments of this application;
FIG. 2 is a cross-sectional view of a positive electrode plate sectioned along a plane defined by a width direction and a depth direction according to some embodiments of this application;
FIG. 3 is a schematic diagram of an existing jelly-roll electrode assembly; and
FIG. 4 is a schematic diagram of a jelly-roll electrode assembly according to some embodiments of this application.

### DETAILED DESCRIPTION OF EMBODIMENTS

The following embodiments enable a person skilled in the art to understand this application more comprehensively, but without limiting this application in any way.

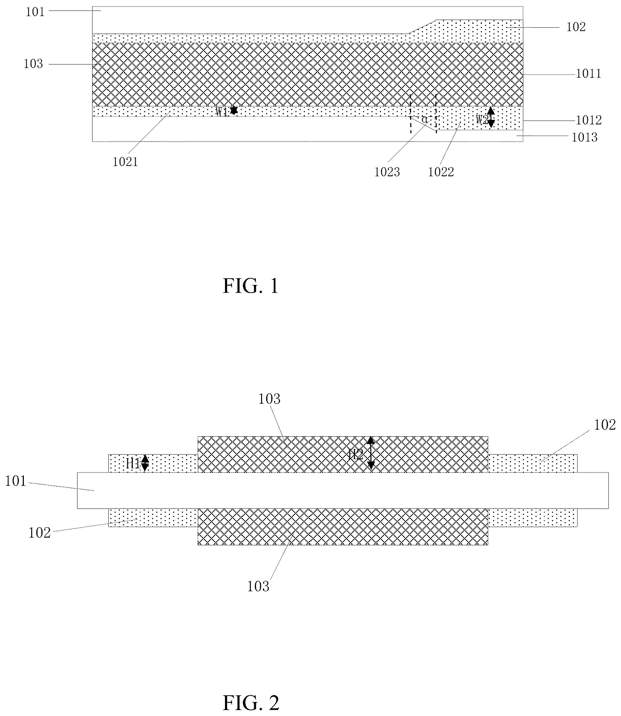

This application provides a cylindrical battery. The cylindrical battery includes a jelly-roll electrode assembly. In some embodiments, the electrode assembly includes a positive electrode plate 10. FIG. 1 is top view of a positive electrode plate 10 in an unwound state. FIG. 2 is a cross-sectional view of a positive electrode plate 10 sectioned along a plane defined by a width direction and a depth direction. In some embodiments, as shown in FIG. 1, the positive electrode plate 10 includes a positive current collector 101, an insulation layer 102, and a positive active material layer 103. The positive active material layer 103 and the insulation layer 102 are both disposed on at least one side of the positive current collector 101. Understandably, although the insulation layer 102 and the positive active material layer 103 shown in FIG. 2 are located on both sides of the positive current collector 101, the drawing is merely exemplary, and the insulation layer 102 and the positive active material layer 103 may exist on just one side of the positive current collector 101.

In some embodiments, as shown in FIG. 1, the positive current collector 101 includes a first region 1011 corresponding to the positive active material layer 103, a second region 1012 corresponding to the insulation layer 102, and a third region 1013 covered by neither the positive active material layer 103 nor the insulation layer 102. In some embodiments, in a width direction of the positive current collector 101 (vertical direction shown in FIG. 1), the second region 1012 is located between the first region 1011 and the third region 1013.

In some embodiments, the insulation layer 102 includes a first part 1021 possessing a first width W1 and a second part 1022 possessing a second width W2, satisfying: W1 + 2 mm ≤ W2 ≤ W1 + 10 mm. The second part 1022 is located outside the electrode assembly, and the first part 1021 of the insulation layer 102 is located on an inner side of or inside the electrode assembly.

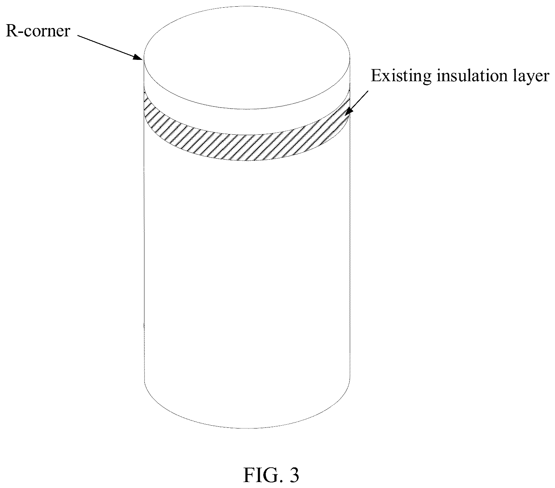

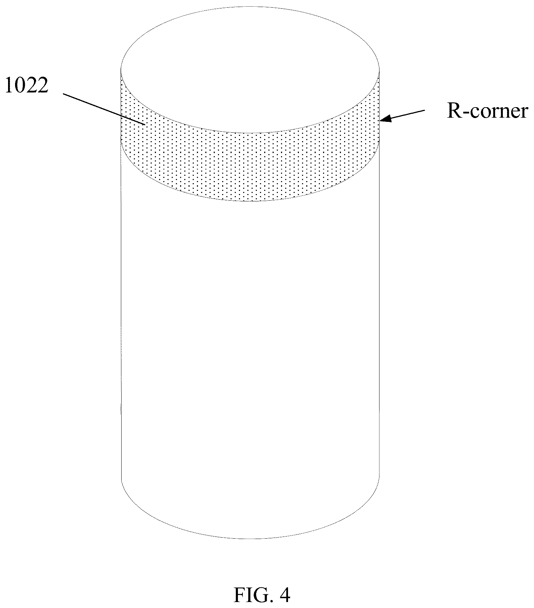

FIG. 3 is a schematic diagram of an existing jelly-roll electrode assembly. Generally, after the electrode assembly is prepared, the electrode assembly is encapsulated in a housing (for example, a metal housing). An adhesive needs to be affixed to at least the R-corners of the electrode assembly in order to prevent contact between the electrode assembly and the housing. FIG. 4 is a schematic diagram of an electrode assembly according to some embodiments of this application. In this application, the insulation layer 102 includes a first part 1021 possessing a first width W1 and a second part 1022 possessing a second width W2, satisfying: W1 + 2 mm ≤ W2 ≤ W1 + 10 mm. The second part 1022 is located outside the electrode assembly. On the one hand, the R-corners of the electrode assembly can be effectively covered only if W1+2 mm is less than or equal to W2. On the other hand, sufficient space can be reserved for welding a current collecting disc only if W2 is less than or equal to W1+10 mm. If the reserved space is not sufficient, poor welding is prone to occur. In this way, the insulation layer 102 can prevent the contact and short circuit between the positive electrode plate and the negative electrode plate, and at the same time, can cover the R-corners of the electrode assembly to prevent the contact between the electrode assembly and the encapsulating housing. In addition, the use of the insulation layer makes an existing adhesive affixing process omissible, thereby reducing the manufacturing cost while ensuring safety of the electrode assembly.

In some embodiments, as shown in FIG. 1, the insulation layer 102 further includes a transition part 1023 located between the first part 1021 and the second part 1022. A transition interface of the transition part 1023 is at an angle α of 10° to 90°. The angle α of the transition interface of the transition part 1023 is an angle of an outer boundary of the transition part 1023 to an extension direction of the insulation layer 102 (horizontal direction in FIG. 1). By causing the angle α to fall within a range of 10° to 90°, it is simpler to apply and process the insulation layer 102.

In some embodiments, the insulation layer 102 and the positive active material layer 103 at least partially overlap in a thickness direction of the positive current collector 101. For example, the positive active material layer 103 may cover a part of the insulation layer 102, or the insulation layer 102 may cover a part of the positive active material layer 103, or a part of the positive active material layer 103 and a part of the insulation layer 102 penetrate each other. In some embodiments, a width of an overlap region between the two layers satisfies: 0.5 mm ≤ W ≤ 3 mm. The existence of the overlap region can further improve stability of the interface between the second part 1022 and the positive active material layer 103, and further improve safety performance of the electrode assembly.

In some embodiments, a length L2 of the second part 1022, a diameter d of the electrode assembly, the first width W1, the second width W2, a thickness h of the positive electrode plate 10, and the angle α satisfy: πd + (W2 - W1) × cotα ≤ L2 ≤ 2π(d - h) + (W2 - W1) × cotα. On the one hand, when L2 is greater than or equal to πd+(W2-W1)×cotα, the R-corners of the electrode assembly can be fully wrapped with the last coil of insulation layer 102. On the other hand, when L2 is less than or equal to 2π(d-h)+(W2-W1)×cotα, at most the last two coils of insulation layer 102 wrap the R-corners, thereby without reducing the weld area of the subsequent welding of the current collecting disc.

In some embodiments, the first width W1 is 1 mm to 5 mm. When the first width W1 is set to be less than 1 mm, the material is hardly processable. When the first width W1 is greater than 5 mm, the volumetric energy density of the cylindrical battery is impaired. In some embodiments, the second width W2 is 3 mm to 15 mm. When the second width W2 is less than 3 mm, the R-corners of the electrode assembly are hardly coverable. When the second width W2 is greater than 15 mm, the weld area of the current collecting disc will be reduced, and the welding is prone to be fragile.

In some embodiments, as shown in FIG. 2, the thickness H1 of the insulation layer 102 is 10 µm to 100 µm. When the thickness H1 is less than 10 µm, the insulation effect is at risk of being poor. When the thickness H1 is greater than 100 µm, the bonding force and flexibility of the insulation layer 102 will be impaired, and the insulation layer 102 is prone to fall off during flattening of a tab, thereby increasing the self-discharge rate of the electrode assembly. In some embodiments, a thickness H1 of the insulation layer 102 and a thickness H2 of the positive active material layer 103 satisfy: 0.1H2 ≤ H1 ≤ 0.5H2. If the thickness H1 of the insulation layer 102 is overly large, as limited by the material of the insulation layer 102, the cold pressing process can hardly meet requirements. If the thickness H1 of the insulation layer 102 is overly small, the insulation effect will be poor.

In some embodiments, a flexural stress of the insulation layer 102 is less than or equal to 0.04 N. If the flexural stress of the insulation layer 102 is greater than 0.04 N, the insulation layer is prone to be brittle and fall off due to insufficient flexibility of the electrode plate during flattening of the tab, thereby increasing the self-discharge rate of the electrode assembly. In some embodiments, a bonding force between the insulation layer 102 and the positive current collector 101 is greater than or equal to 20 N/m. If the bonding force between the insulation layer 102 and the positive current collector 101 is less than 20 N/m, the insulation layer 102 is prone to fall off due to insufficient bonding force during flattening of the tab, thereby increasing the self-discharge rate of the electrode assembly.

In some embodiments, the positive current collector 101 may be an aluminum foil, or may be another positive current collector commonly used in this field. In some embodiments, the thickness of the positive current collector may be 1 µm to 50 µm.

In some embodiments, the positive active material layer 103 may include a positive active material, a conductive agent, and a binder. In some embodiments, the positive active material may include at least one of lithium cobalt oxide, lithium iron phosphate, lithium aluminum oxide, lithium manganese oxide, or lithium nickel cobalt manganese oxide. In some embodiments, the conductive agent of the positive electrode plate 10 may include at least one of conductive carbon black, graphite sheets, graphene, or carbon nanotubes. In some embodiments, the binder in the positive electrode plate 10 may include at least one of polyvinylidene difluoride, poly(vinylidene fluoride-co-hexafluoropropylene), poly(styrene-co-acrylate), poly(styrene-co-butadiene), polyamide, polyacrylonitrile, polyacrylic ester, polyacrylic acid, sodium polyacrylate, sodium carboxymethyl cellulose, polyvinyl acetate, polyvinylpyrrolidone, polyvinyl ether, polymethyl methacrylate, polytetrafluoroethylene, or polyhexafluoropropylene. In some embodiments, a mass ratio of the positive active material, the conductive agent, and the binder in the positive active material layer 103 is (80 to 99): (0.1 to 10): (0.1 to 10), but this is merely an example, and any other appropriate mass ratio may apply.

In some embodiments, the insulation layer 102 may include a binder and inorganic particles. In some embodiments, the binder in the insulation layer 102 may include at least one of polyvinylidene difluoride, poly(vinylidene fluoride-co-hexafluoropropylene), poly(styrene-co-acrylate), poly(styrene-co-butadiene), polyamide, polyacrylonitrile, polyacrylic ester, polyacrylic acid, sodium polyacrylate, sodium carboxymethyl cellulose, polyvinyl acetate, polyvinylpyrrolidone, polyvinyl ether, polymethyl methacrylate, polytetrafluoroethylene, or polyhexafluoropropylene. In some embodiments, the inorganic particles may include ceramic particles and the like. The mass ratio between the binder and the inorganic particles in the insulation layer 102 may be (20 to 40): (60 to 80), but this is merely exemplary, and other appropriate mass ratios may be used instead.

In some embodiments, the jelly-roll electrode assembly may further include a negative electrode plate and a separator. The separator is located between the positive electrode plate and the negative electrode plate to serve an insulation function. In some embodiments, the negative electrode plate includes a negative current collector and a negative active material layer. The negative active material layer is located on one side or both sides of the negative current collector. In some embodiments, the negative current collector may be at least one of a copper foil, a nickel foil, or a carbon-based current collector. In some embodiments, the negative active material layer may include a negative active material, a conductive agent, and a binder. In some embodiments, the negative active material may include at least one of graphite or a silicon-based material. In some embodiments, the silicon-based material includes at least one of silicon, a silicon-oxygen material, a silicon-carbon material, or a silicon-oxygen-carbon material. In some embodiments, the conductive agent in the negative active material layer may include at least one of conductive carbon black, Ketjen black, graphite flakes, graphene, carbon nanotubes, or carbon fiber. In some embodiments, the binder in the negative active material layer may include at least one of carboxymethyl cellulose (CMC), polyacrylic acid, polyvinylpyrrolidone, polyaniline, polyimide, polyamideimide, polysiloxane, styrene butadiene rubber, epoxy resin, polyester resin, polyurethane resin, or polyfluorene. In some embodiments, a mass ratio between the negative active material, the conductive agent, and the binder in the negative active material layer may be (78 to 98.5): (0.1 to 10): (0.1 to 10). Understandably, the materials and mass ratio specified above are merely exemplary, and any other appropriate materials and mass ratio may be used instead.

In some embodiments, the separator includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. Especially, the polyethylene and the polypropylene are highly effective in preventing short circuits, and can improve stability of the battery through a turn-off effect. In some embodiments, a thickness of the separator falls within a range of approximately 3 µm to 20 µm.

In some embodiments, a surface of the separator may further include a porous layer. The porous layer is disposed on at least one surface of the separator. The porous layer includes inorganic particles and a binder. The inorganic particles are at least one selected from aluminum oxide (Al₂O₃), silicon oxide (SiO₂), magnesium oxide (MgO), titanium oxide (TiO₂), hafnium dioxide (HfO₂), tin oxide (SnO₂), ceria (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide, and barium sulfate. In some embodiments, a diameter of a pore of the separator is within a range of approximately 0.01 µm to 1 µm. The binder in the porous layer is at least one selected from polyvinylidene difluoride, poly(vinylidene difluoride-co-hexafluoropropylene), polyamide, polyacrylonitrile, polyacrylic ester, polyacrylic acid, sodium polyacrylate, sodium carboxymethyl cellulose, polyvinylpyrrolidone, polyvinyl ether, polymethyl methacrylate, polytetrafluoroethylene, and polyhexafluoropropylene. The porous layer on the surface of the separator can improve heat resistance, oxidation resistance, and electrolyte infiltration performance of the separator, and enhance adhesion between the separator and the electrode plate.

In some embodiments, the cylindrical battery includes a lithium-ion battery as an example, but this application is not limited to the example. In some embodiments, the cylindrical battery further includes an electrolytic solution. The electrolytic solution includes at least one of fluoroether, fluoroethylene carbonate, or ether nitrile. In some embodiments, the electrolytic solution further includes a lithium salt. The lithium salt includes lithium bis(fluorosulfonyl)imide and lithium hexafluorophosphate. The concentration of the lithium salt is 1 mol/L to 2 mol/L, and the mass ratio between the lithium bis(fluorosulfonyl)imide and the lithium hexafluorophosphate is 0.06 to 5. In some embodiments, the electrolytic solution may further include a nonaqueous solvent. The nonaqueous solvent may be a carbonate compound, a carboxylate compound, an ether compound, another organic solvent, or any combination thereof.

The carbonate compound may be a chain carbonate compound, a cyclic carbonate compound, a fluorocarbonate compound, or any combination thereof.

Examples of the chain carbonate compound are diethyl carbonate (DEC), dimethyl carbonate (DMC), dipropyl carbonate (DPC), methyl propyl carbonate (MPC), ethylene propyl carbonate (EPC), ethyl methyl carbonate (EMC), or any combination thereof. Examples of the cyclic carbonate compound are ethylene carbonate (EC), propylene carbonate (PC), butylene carbonate (BC), vinyl ethylene carbonate (VEC), or any combination thereof. Examples of the fluorocarbonate compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof.

Examples of the carboxylate compound are methyl acetate, ethyl acetate, n-propyl acetate, tert-butyl acetate, methyl propionate, ethyl propionate, propyl propionate, γ-butyrolactone, decanolactone, valerolactone, mevalonolactone, caprolactone, methyl formate, or any combination thereof.

Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof.

Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or any combination thereof.

An embodiment of this application further provides an electronic device containing the cylindrical battery. The electronic device according to this embodiment of this application is not particularly limited, and may be any electronic device known in the prior art. In some embodiments, the electronic device may include, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, unmanned aerial vehicle, lighting appliance, toy, game console, watch, electric tool, flashlight, camera, large household battery, lithium-ion capacitor, or the like.

Some specific embodiments and comparative embodiments are enumerated below to give a clearer description of this application, using a lithium-ion battery as an example.

### Comparative Embodiment 1

Preparing a negative electrode plate: Using copper foil as a current collector, using artificial graphite as a negative active material, and using styrene-butadiene rubber and carboxymethyl cellulose as binders. Mixing the negative active material, the styrene-butadiene rubber, and the sodium carboxymethyl cellulose at a mass ratio of 98: 1: 1, and dispersing the mixture in deionized water to form a slurry. Stirring well, applying the slurry onto the copper foil. Drying the slurry to form a negative active material layer, where the thickness of the negative active material layer is 120 µm. Performing cold pressing and slitting to obtain a negative electrode plate.

Preparing a positive electrode plate: Mixing lithium cobalt oxide as a positive active material, conductive carbon black, and polyvinylidene difluoride (PVDF) as a binder at a mass ratio of 94.8: 2.8: 2.4 in an N-methyl-pyrrolidone solvent system, and stirring well to form a slurry. Coating an aluminum foil with the slurry to form a positive active material layer, where the thickness of the positive active material layer is 80 µm. Mixing the binder polyvinylidene difluoride as a binder and Al₂O₃ at a mass ratio of 40: 60 in an N-methyl-pyrrolidone solvent system, and stirring well to form a slurry. Applying the slurry onto both sides of the positive active material layer in a width direction to obtain an insulation layer that is 30 µm thick. Subsequently, performing drying and cold pressing to obtain a positive electrode plate.

Preparing a separator: Stirring polyacrylic ester to form a homogeneous slurry. Coating both sides of a porous substrate (polyethylene) with the slurry, and performing drying to form a separator.

Preparing an electrolytic solution: Mixing, in an environment with a water content of less than 10 ppm, lithium hexafluorophosphate with a nonaqueous organic solvent at a mass ratio of 8: 92 to form an electrolytic solution in which a lithium salt concentration is 1 mol/L, where the nonaqueous organic solvent contains ethylene carbonate (EC), diethyl carbonate (DEC), propylene carbonate (PC), propyl propionate (PP), and vinylene carbonate (VC) mixed at a mass ratio of 20: 30: 20: 28: 2.

Preparing a lithium-ion battery: Stacking the positive electrode plate, the separator, and the negative electrode plate sequentially in such a way that the separator is located between the positive electrode plate and the negative electrode plate to serve a function of separation, and winding the stacked structure to obtain an electrode assembly. Putting the electrode assembly in an aluminum plastic film that serves as an outer package. Dehydrating the electrode assembly at 80 °C, injecting the electrolytic solution, and performing packaging. Performing steps such as chemical formation, degassing, and shaping to obtain a 18650 lithium-ion battery with a diameter of 18 mm.

Comparative Embodiment 2 and Embodiments 1 to 11 are similar to Comparative Embodiment 1 except parameter differences. The specific differences are shown in Table 1 below.

In addition, in this application, the corresponding parameters are measured by using the following methods.

### Testing the flexural stress (flexibility) of the insulation layer:

Cutting out rectangular cuboid samples of 80 mm (length) × 20 mm (width) from a positive electrode plate containing the insulation layer by using a cutter, and then measuring the flexural stress of the samples by a three-point bending method by using an Instron 3365 universal tensile tester.

### Testing the bonding force of the insulation layer:

Polishing a stainless steel sheet of 200 mm (length) × 50 mm (width) with 500-mesh sandpaper until the sheet surface is smooth, and then cleaning the stainless steel sheet with alcohol and drying the sheet. Cutting double-sided tape of 20 mm in width into a rectangle of 60 mm in length by using a knife, and affixing the cut-out double-sided tape onto the stainless steel sheet. Subsequently, cutting the positive electrode plate containing the insulation layer into a cuboid of 80 mm (length) × 20 mm (width) by using a cutter, and then aligning and affixing one end of the positive electrode plate containing the insulation layer onto the double sided tape, and reserving a 20 cm length of the positive electrode plate, and then affixing a strip of A4 paper of 80 mm (length) × 20 mm (width) to the reserved electrode plate by using masking tape, so as to make a sample for stretching. Testing the bonding force of the electrode plate samples in groups by a 90°/180° stretching test method by using an Instron 3365 universal tensile tester with reference to GJB 446-88 *Adhesive 90° Peel Strength Test Method (Metal to Metal)* and GB T 2790-1995 *Adhesive 180° Peel Strength Test Method.* Testing 5 samples in group, and calculating an average of the measured values as a final bonding strength value.

Table 1 shows parameters and evaluation results in Embodiments 1 to 11 and Comparative Embodiments 1 to 2.

**Table 1**

| | W₁ (m m) | W₂ (m m) | α (° ) | L2 (mm ) | H₁ (µ m) | H₂ (µ m) | Flexu ral stress (N) | Bondi ng force (N/m) | Cold-pressi ng proce ss pass rate | Are R-corner s wrapp ed? | Does coating layer fall off during tab flatteni ng? |
|---|---|---|---|---|---|---|---|---|---|---|---|
| Compara tive Embodi ment 1 | 1 | 2 | 9 0 | 56. 55 | 30 | 80 | 0.02 5 | 40 | 10/1 0 | No | No |
| Embodi ment 1 | 1 | 3 | 9 0 | 56. 55 | 30 | 80 | 0.02 5 | 40 | 10/1 0 | Yes | No |
| Embodi ment 2 | 3 | 10 | 9 0 | 56. 55 | 30 | 80 | 0.02 5 | 40 | 10/1 0 | Yes | No |
| Embodi ment 3 | 5 | 15 | 9 0 | 56. 55 | 30 | 80 | 0.02 5 | 40 | 10/1 0 | Yes | No |
| Compara tive Embodi ment 2 | 5 | 6 | 9 0 | 56. 55 | 30 | 80 | 0.02 5 | 40 | 10/1 0 | No | No |
| Embodi ment 4 | 3 | 10 | 9 0 | 56. 55 | 30 | 80 | 0.02 5 | 40 | 10/1 0 | Yes | No |
| Embodi ment 5 | 3 | 10 | 4 5 | 63. 55 | 30 | 80 | 0.02 5 | 40 | 10/1 0 | Yes | No |
| Embodi ment 6 | 3 | 10 | 1 0 | 96. 25 | 30 | 80 | 0.02 5 | 40 | 10/1 0 | Yes | No |
| Embodi ment 7 | 3 | 10 | 9 0 | 56. 55 | 10 | 80 | 0.03 | 100 | 10/1 0 | Yes | No |
| Embodi ment 8 | 3 | 10 | 9 0 | 56. 55 | 40 | 80 | 0.03 | 30 | 10/1 0 | Yes | No |
| Embodi ment 9 | 3 | 10 | 9 0 | 56. 55 | 50 | 80 | 0.03 | 30 | 7/10 | Yes | No |
| Embodi ment 10 | 3 | 10 | 9 0 | 56. 55 | 10 0 | 20 0 | 0.04 | 20 | 10/1 0 | Yes | No |
| Embodi ment 11 | 3 | 10 | 9 0 | 56. 55 | 12 0 | 25 0 | 0.05 | 10 | 10/1 0 | Yes | Yes |

As can be seen from Embodiment 1 versus Comparative Embodiment 1, when W1+2 mm is less than or equal to W2, the R-corners of the lithium-ion battery can be covered effectively. The same conclusion can be drawn from comparison between Embodiment 3 and Comparative Embodiment 2.

As can be seen from Embodiment 9, when the thickness H1 of the insulation layer is greater than a half of the thickness H2 of the positive active material layer, the cold-pressing process of the electrode plate is adversely affected.

As can be seen from Embodiment 11, when the thickness H1 of the insulation layer is overly large, the flexural stress of the insulation layer is overly high, and the bonding force between the insulation layer and the positive current collector is overly small, thereby making the active material coating layer prone to fall off during tab flattening.

What is described above is merely exemplary embodiments of this application and the technical principles thereof. A person skilled in the art understands that the scope of disclosure in this application is not limited to the technical solutions formed by a specific combination of the foregoing technical features, but covers other technical solutions formed by arbitrarily combining the foregoing technical features or equivalents thereof, for example, a technical solution formed by replacing any of the foregoing features with a technical feature disclosed herein and serving similar functions.

## Claims

1. A cylindrical battery, **characterized in that** the battery comprises:
a jelly-roll electrode assembly, wherein the electrode assembly comprises a positive electrode plate; the positive electrode plate comprises a positive current collector, a positive active material layer, and an insulation layer; both the positive active material layer and the insulation layer are disposed on at least one side of the positive current collector; the positive current collector comprises a first region covered by the positive active material layer, a second region covered by the insulation layer, and a third region covered by neither the positive active material layer nor the insulation layer; and the second region is located between the first region and the third region in a width direction of the positive current collector; and
in a winding direction of the electrode assembly, the insulation layer comprises a first part having a first width W1 and a second part having a second width W2, satisfying: W1 + 2 mm ≤ W2 ≤ W1 + 10 mm, and the second part is located on an outer side of the jelly-roll electrode assembly.

2. The cylindrical battery according to claim 1, **characterized in that** the insulation layer further comprises a transition part located between the first part and the second part, and a transition interface of the transition part is at an angle α of 10° to 90°.

3. The cylindrical battery according to claim 1, **characterized in that** the insulation layer and the positive active material layer at least partially overlap in a thickness direction of the positive current collector, and a width W of an overlap region between the two layers satisfies: 0.5 mm ≤ W ≤ 3 mm.

4. The cylindrical battery according to claim 2, **characterized in that** a length L2 of the second part, a diameter d of the electrode assembly, the first width W1, the second width W2, a thickness h of the positive electrode plate, and the angle α satisfy: πd + (W2 - W1) × cotα ≤ L2 ≤ 2π(d - h) + (W2 - W1) × cotα.

5. The cylindrical battery according to claim 1, **characterized in that** the first width W1 is 1 mm to 5 mm, and the second width W2 is 3 mm to 15 mm.

6. The cylindrical battery according to claim 1, **characterized in that** a thickness H1 of the insulation layer is 10 µm to 100 µm.

7. The cylindrical battery according to claim 1, **characterized in that** a thickness H1 of the insulation layer and a thickness H2 of the positive active material layer satisfy: 0.1H2 ≤ H1 ≤ 0.5H2.

8. The cylindrical battery according to claim 1, **characterized in that** a flexural stress of the insulation layer is less than or equal to 0.04 N.

9. The cylindrical battery according to claim 1, **characterized in that** a bonding force between the insulation layer and the positive current collector is greater than or equal to 20 N/m.

10. An electronic device, **characterized in that** the electronic device comprises the cylindrical battery according to any one of claims 1 to 9.
